# FASCICULE DE BREVET EUROPEEN

(11) **EP 1 568 607 B1**
(45) Date de publication et mention de la délivrance du brevet: **23.08.2006**
(21) Numéro de dépôt: 05290401.8
(22) Date de dépôt: 22.02.2005
(51) Int. Cl.: B64D 11/06

(54) **Agencement de sièges pour cabine d'avion**
Sitzanordnung für Flugzeugkabine
Arrangement of seats for aircraft cabin

(30) Priorité: 26.02.2004 FR 0450366
(43) Date de publication de la demande: 31.08.2005
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Mercier, Guy, 36100 Neuvy-Pailloux (FR)
(74) Mandataire: Geismar, Thierry

(56) Documents cités:
- EP-A- 1 364 874
- WO-A-03/013903
- GB-A- 2 362 095
- US-A1- 2002 070 314

## Description

L'invention concerne un agencement de sièges individuels pour passagers d'un avion, et plus particulièrement un agencement de sièges comprenant une pluralité de sièges convertibles en couchettes et disposés en rangées, chaque rangée s'étendant selon la direction longitudinale du véhicule, et chaque siège étant orienté vers l'avant de l'avion.

Dans les cabines d'avion dans lesquelles les sièges sont convertibles en couchettes, l'agencement desdits sièges doit tenir compte de plusieurs critères : il est en effet nécessaire d'assurer aux passagers non seulement un confort élevé, mais également des conditions de sécurité optimales, et ce tout en prévoyant un nombre de sièges par cabine suffisant pour répondre aux exigences économiques liées à ce type de transport.

On connaît déjà des agencements de sièges convertibles en couchettes, pour cabines d'avion, dans lesquels les sièges sont disposés en plusieurs rangées longitudinales. Ces agencements prévoient un groupe central et deux groupes latéraux de rangées situés de part et d'autre du groupe central, le groupe central étant séparé des deux groupes latéraux respectivement par un couloir de circulation ainsi que, par exemple, dans le document EP 1 364 874. Toutefois, dans ce type d'agencement, les passagers qui sont situés à distance d'un couloir de circulation sont obligés, pour accéder audit couloir, d'enjamber leur voisin si celui-ci a placé son siège en position de couchette. Ce type d'agencement est donc peu satisfaisant en terme de confort, mais également en terme de sécurité, si par exemple les passagers doivent rejoindre rapidement les issues de secours.

Pour résoudre ces inconvénients, l'invention propose un agencement de sièges pour véhicule de transport, qui assure à la fois le confort et la sécurité des passagers, tout en prévoyant un nombre de places en accord avec les exigences économiques liées au type de transport concerné.

A cet effet, l'invention a pour objet un agencement de sièges individuels pour passagers d'un avion, comprenant une pluralité de sièges convertibles en couchettes et disposés en rangées, chaque rangée s'étendant selon la direction longitudinale de l'avion, et chaque siège étant orienté vers l'avant de l'avion, caractérisé en ce qu'il comprend :
- deux groupes latéraux de deux rangées contiguës, chaque groupe étant disposé le long d'une paroi du fuselage de l'avion, les sièges d'une rangée étant décalés longitudinalement par rapport aux sièges de l'autre rangée, et ;
- deux groupes centraux comprenant chacun deux rangées contiguës, lesdits groupes centraux étant accolés l'un à l'autre latéralement, les sièges d'une rangée étant décalés longitudinalement par rapport aux sièges de l'autre rangée, lesdits groupes centraux étant séparés de chacun des groupes latéraux par un couloir de circulation,
chaque groupe latéral et central comprenant, entre deux sièges consécutifs d'une première rangée, un pas apte à laisser un passage transversal vers un couloir de circulation pour les passagers de la seconde rangée, lorsque le siège correspondant de la première rangée est en position de couchette.

Un tel agencement présente l'avantage d'éviter à tous les passagers d'enjamber le passager voisin pour atteindre le couloir de circulation, lorsque le siège de celui-ci est placé en position de couchette. En outre, cet agencement permet de préserver l'intimité de chaque passager, et améliore ainsi son confort de façon notable.

Dans un mode de réalisation particulier, chaque siège est pourvu d'un dossier réglable en inclinaison, d'une assise réglable en inclinaison, d'un repose-jambe réglable en inclinaison, et d'une coque fixe de séparation sensiblement en forme de S, ladite coque comprenant une première paroi transversale s'étendant derrière le dossier dudit siège, une deuxième paroi transversale s'étendant devant le siège adjacent de la rangée contiguë, et une paroi longitudinale s'étendant entre les deux parois transversales.

Egalement dans un mode de réalisation particulier, un espace est aménagé entre deux sièges consécutifs sur les rangées disposées le long d'une paroi du fuselage de l'avion, et sur chacune des deux rangées adjacentes l'une à l'autre des deux groupes centraux.

D'autres objets et avantages de l'invention apparaîtront au cours de la description qui suit, faite en référence aux dessins annexés dans lesquels :
- la figure 1 est une vue schématique de dessus d'une partie d'une cabine d'avion, comprenant un agencement de sièges selon l'invention ; et
- la figure 2 est une vue à plus grande échelle du détail II de la figure 1.

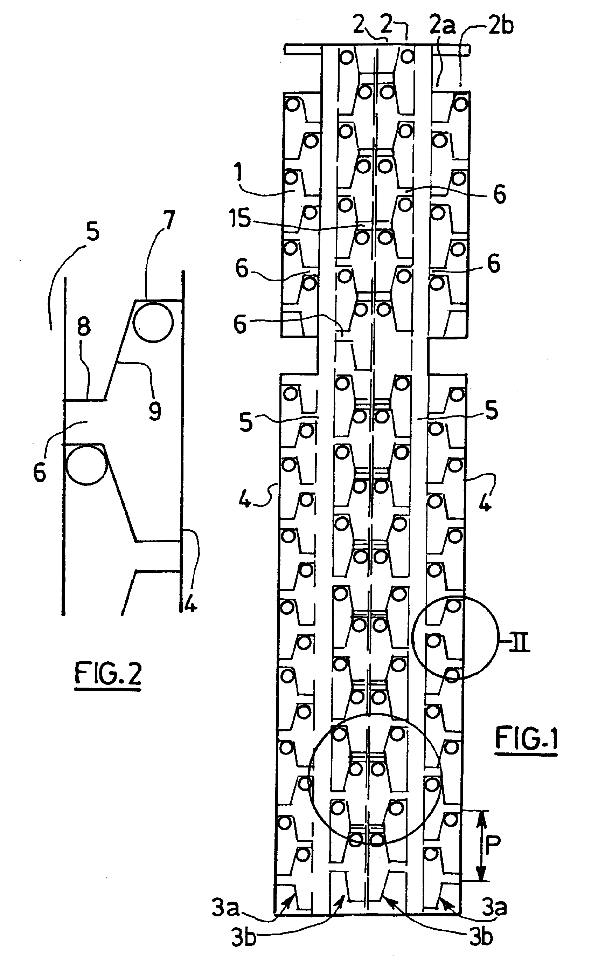

L'agencement de sièges représenté sur la figure 1 est destiné aux avions de type long courrier. Il comprend une pluralité de sièges 1 convertibles en couchettes et disposés en huit rangées 2 parallèles, chaque rangée 2 s'étendant selon la direction longitudinale de l'avion, c'est-à-dire de l'avant vers l'arrière.

Les rangées 2 de sièges sont groupées deux à deux, de sorte à former quatre groupes parallèles 3, à savoir deux groupes latéraux 3a, proches des parois 4 de l'avion, et deux groupes centraux 3b. Chaque groupe latéral 3a est séparé du groupe central adjacent 3b par un couloir de circulation 5. En revanche, les deux groupes centraux 3b sont accolés l'un à l'autre latéralement.

Deux couloirs de circulation 5 sont donc prévus dans la cabine, un entre chaque groupe latéral 3a et le groupe central 3b adjacent.

En outre, dans chaque groupe 3 de deux rangées, le siège d'une première rangée 2a et le siège adjacent de la seconde rangée 2b sont décalés longitudinalement l'un par rapport à l'autre.

Les quatre groupes 3 de rangées comprennent un passage transversal 6 ménagé entre deux sièges adjacents de leur rangée adjacente au couloir de circulation 5, ce passage 6 étant agencé pour permettre la circulation du passager du siège adjacent de l'autre rangée du groupe, notamment lorsque ledit siège est en position de couchette. Le pas longitudinal des sièges est ici égal à P.

Par conséquent, les passagers situés contre les parois 4 de l'avion et ceux situés dans les rangées adjacentes des deux groupes centraux peuvent donc sortir de leur place en empruntant le passage 6, et tous les autres passagers ont directement accès à l'un ou l'autre des couloirs de circulation 5 soit par leur droite, soit par leur gauche.

Les sièges 1 sont pourvus d'un dossier, d'une assise, d'un repose-jambe réglables en inclinaison. Ils comprennent en outre une coque fixe de séparation disposée derrière le dossier, dite coque fixe de séparation arrière.

La coque fixe est ici sensiblement en forme de S, comprenant une première paroi transversale 7 s'étendant derrière le dossier dudit siège, une deuxième paroi transversale 8 s'étendant devant le siège adjacent de la rangée contiguë, et une paroi longitudinale 9 s'étendant entre les deux parois transversales.

Les sièges 1 sont agencés pour que, en position de couchette, le repose-jambe d'un siège soit disposé sous la coque fixe du siège adjacent suivant la direction longitudinale, dite coque fixe de séparation avant.

En particulier, de tels sièges peuvent être conformes à ceux faisant l'objet du brevet FR-2 820 400, dans lesquels les mouvements de chacun des éléments sont indépendant les uns des autres et des coques fixes de séparation, et dans lesquels des moyens de commande permettent au siège d'adopter, entre une position droite de décollage et d'atterrissage du siège et une position allongée du siège, toutes les positions autorisées par l'espace compris entre la coque fixe de séparation avant et la coque fixe de séparation arrière.

On observera qu'un espace 15 tel que les passages 6 est ménagé longitudinalement entre deux sièges consécutifs des rangées adjacentes des deux groupes centraux. Ces espaces 15 peuvent par exemple être aménagés en rangements. Un aménagement similaire peut être prévu pour les rangées adjacentes à une paroi du fuselage de l'avion.

## Revendications

1. Agencement de sièges individuels pour passagers d'un avion, comprenant une pluralité de sièges (1) convertibles en couchettes et disposés en rangées (2), chaque rangée s'étendant selon la direction longitudinale de l'avion, et chaque siège étant orienté vers l'avant de l'avion, **caractérisé en ce qu'**il comprend :
- deux groupes latéraux (3a) de deux rangées contiguës, chaque groupe étant disposé le long d'une paroi (4) du fuselage de l'avion, les sièges d'une rangée étant décalés longitudinalement par rapport aux sièges de l'autre rangée, et ;
- deux groupes centraux (3b) comprenant chacun deux rangées contiguës, lesdits groupes centraux étant accolés l'un à l'autre latéralement, les sièges d'une rangée étant décalés longitudinalement par rapport aux sièges de l'autre rangée, lesdits groupes centraux étant séparés de chacun des groupes latéraux par un couloir de circulation,
chaque groupe latéral et central comprenant, entre deux sièges consécutifs d'une première rangée, un pas apte à laisser un passage transversal (6) vers un couloir de circulation (7) pour les passagers de la seconde rangée, lorsque le siège correspondant de la première rangée est en position de couchette.

2. Agencement selon la revendication 1, **caractérisé en ce que** chaque siège est pourvu d'un dossier réglable en inclinaison, d'une assise réglable en inclinaison, d'un repose-jambe réglable en inclinaison, et d'une coque fixe de séparation sensiblement en forme de S, ladite coque comprenant une première paroi transversale (7) s'étendant derrière le dossier dudit siège, une deuxième paroi transversale (8) s'étendant devant le siège adjacent de la rangée contiguë, et une paroi longitudinale (9) s'étendant entre les deux parois transversales.

3. Agencement selon la revendication 2, **caractérisé en ce que** les sièges (1) sont agencés pour que, en position de couchette, le repose-jambe d'un siège soit disposé sous la coque fixe du siège adjacent suivant la direction longitudinale.

4. Agencement selon l'une quelconque des revendications précédentes, **caractérisé en ce que**, sur les rangées disposées le long d'une paroi du fuselage de l'avion, et sur chacune des deux rangées adjacentes l'une à l'autre des deux groupes centraux, un espace (15) est aménagé entre deux sièges consécutifs.

## Claims

1. An arrangement of individual seats for the passengers of an aircraft, said arrangement comprising a plurality of seats (1) that are convertible into beds or couchettes, and that are disposed in rows (2), each row extending in the longitudinal direction of the aircraft, and each seat facing towards the front of the aircraft, said arrangement being **characterized in that** it comprises:
- two side groups (3a) of rows, each of which groups comprises two contiguous rows, each group being disposed along one wall (4) of the fuselage of the aircraft, the seats of one row in each group being offset longitudinally relative to the seats of the other row in the group; and
- two central groups (3b) of rows, each of which groups has two contiguous rows, said central groups adjoining each other side-by-side, the seats in one row of each group being offset longitudinally relative to the seats of the other row of the group, said central groups being separated from the side groups via respective gangways;
the pitch between two consecutive seats of a first row in each side group and in each central group being suitable for leaving a transverse passageway (6) towards a gangway (7) for the passengers of the second row, when the corresponding seat of the first row is in the bed position.

2. An arrangement according to claim 1, **characterized in that** each seat is provided with a seat back whose inclination is adjustable, with a seat proper whose inclination is adjustable, with a leg rest whose inclination is adjustable, and with a stationary separator shell that is substantially S-shaped, said shell comprising a first transverse wall (7) extending behind the back of said seat, a second transverse wall (8) extending in front of the adjacent seat of the contiguous row, and a longitudinal wall (9) extending between the two transverse walls.

3. An arrangement according to claim 2, **characterized in that** the seats (1) are arranged so that, in the bed position, the leg-rest of a seat is disposed under the stationary shell of the adjacent seat in the longitudinal direction.

4. An arrangement according to any preceding claim, **characterized in that**, in the rows disposed along a wall of the fuselage of the aircraft, and in each of those respective rows of the central groups which are adjacent to each other, a space (15) is provided between consecutive seats.

## Patentansprüche

1. Sitzanordnung für Flugzeugpassagiere, bestehend aus einer Vielzahl einzelner Sitze (1), welche zu Liegen gekippt werden können und in Reihen (2) angeordnet sind, wobei jede Reihe in Längsrichtung verläuft und jeder Sitz nach vorne ausgerichtet ist, **dadurch gekennzeichnet, dass** sie folgendes umfasst:
- zwei seitliche Gruppen (3a) mit jeweils zwei aneinandergrenzenden Reihen, wobei jede Gruppe entlang einer Wand (4) des Flugzeugrumpfs angeordnet ist und die Sitze einer Reihe längsversetzt zu den Sitzen der anderen Reihe stehen, und:
- zwei mittlere Sitzgruppen (3b) mit jeweils zwei aneinander grenzenden Reihen, wobei besagte mittlere Gruppen seitlich aneinander grenzen und die Sitze einer Reihe längsversetzt zu den Sitzen der anderen Reihe stehen, wobei besagte mittlere Gruppen von jeder seitlich angeordneten Gruppe durch einen Gang getrennt sind,
wobei bei jeder seitlich und in der Mitte angeordneten Gruppe zwischen zwei aufeinander folgenden Sitzen einer ersten Reihe ein Abstand besteht, der einen Querdurchgang (6) zu einem Gang (7) für die Passagiere der zweiten Reihe frei gibt, wenn der entsprechende Sitz der ersten Reihe in Liegeposition steht.

2. Anordnung nach Anspruch 1, **dadurch gekennzeichnet, dass** jeder Sitz eine neigungsverstellbare Rückenlehne, einen neigungsverstellbaren Sitz, eine neigungsverstellbare Fußstütze und eine etwa s-förmige fest stehende Schale umfasst, wobei besagte Schale eine erste, hinter der Rückenlehne besagten Sitzes verlaufende Querwand (7), eine zweite, vor dem angrenzenden Sitz der benachbarten Reihe verlaufende Querwand (8), und eine zwischen den beiden Querwänden verlaufende Längswand (9) umfasst.

3. Anordnung nach Anspruch 2, **dadurch gekennzeichnet, dass** die Sitze (1) so angeordnet sind, dass die Fußstütze eines Sitzes unter der fest stehenden Schale des angrenzenden Sitzes längs angeordnet ist.

4. Anordnung nach einem der vorhergehenden Ansprüche, **dadurch gekennzeichnet, dass** in den entlang einer Wand des Flugzeugrumpfes angeordneten Reihen und in jeder der beiden angrenzenden Reihen der beiden mittleren Sitzgruppen zwischen zwei benachbarten Sitzen ein Raum (15) vorgesehen wurde.
